# EUROPÄISCHE PATENTSCHRIFT

(11) **EP 4 316 669 B1**
(45) Veröffentlichungstag und Bekanntmachung des Hinweises auf die Patenterteilung: **31.12.2025**
(21) Anmeldenummer: 23185543.8
(22) Anmeldetag: 14.07.2023
(51) Int. Cl.: B05B 7/08, B05B 13/04, B05C 5/02

(54) **DÜSENANORDNUNG ZUM AUFTRAGEN VON FLUIDEN, SYSTEM MIT EINER SOLCHEN DÜSENANORDNUNG UND VERFAHREN ZUM AUFTRAGEN VON FLUIDEN**
NOZZLE ASSEMBLY FOR APPLYING FLUIDS, SYSTEM COMPRISING SUCH A NOZZLE ASSEMBLY AND METHOD FOR APPLYING FLUIDS
ENSEMBLE BUSE POUR L'APPLICATION DE FLUIDES, SYSTÈME COMPRENANT UN TEL ENSEMBLE BUSE ET PROCÉDÉ D'APPLICATION DE FLUIDES

(30) Priorität: 14.07.2022 DE 102022117652
(43) Veröffentlichungstag der Anmeldung: 07.02.2024
(73) Patentinhaber: Illinois Tool Works Inc., Glenview, IL 60025 (US)
(72) Erfinder: PAHL, Andreas, Glenview, Illinois 60025 (US)
(74) Vertreter: Meissner Bolte Partnerschaft mbB

(56) Entgegenhaltungen:
- WO-A1-2014/136367
- WO-A2-2006/056409
- DE-A1- 3 523 521
- US-A- 5 685 934
- US-B1- 7 934 465

## Beschreibung

Die Erfindung betrifft allgemein das Auftragen von Fluiden, einschließlich thermoplastischen oder faserigen Klebstoffen auf ein Substrat durch mindestens eine Düsenanordnung, die auf einer Montagefläche eines Verteilers oder eines Verteilerkopfs vorzugsweise lösbar befestigt ist, wobei der Verteiler oder Verteilerkopf in der Regel dazu dient, der mindestens einen Düsenanordnung das auf das Substrat aufzutragende Fluid zuzuführen.

Der Zweck eines solchen Systems ist das Auftragen von Fluiden auf zum Beispiel sich relativ zu der mindestens einen Düsenanordnung bewegende Substrate, und insbesondere das Auftragen von Klebstoffen in Teilsprühmustern zum teilweise Bedecken eines Substrats.

Die Druckschrift EP 0 872 580 A offenbart beispielsweise eine Mehrzahl von Schmelzblas-Düsenanordnungen oder Düsen, die Seite an Seite an einem oder beiden Enden eines herkömmlichen Verteilers oder Verteilerkopfes befestigbar sind, welcher für eine dosierte Zufuhr von Klebstoff zu jeder Düsenanordnung sorgt. Die Düsenanordnungen umfassen jeweils eine Mehrzahl von im Wesentlichen parallelen Plattenelementen, die sich an einer Austrittsfläche bilden. Die Reihe von Fluid-Austrittsöffnungen jeder Düsenanordnung bildet einen Abschnitt einer längeren Reihe, die durch die Mehrzahl von benachbarten Düsenanordnungen gebildet wird, welche entlang einem gemeinsamen Ende des Verteilerkopfes angeordnet sind. Eine oder beide Seiten des Verteilers können neben der Seite eines ähnlich aufgebauten Verteilerkopfes befestigt sein, um noch längere Reihen von Fluid-Austrittsöffnungen zu bilden, wodurch ein modulares Schmelzblas-Klebstoff-Spendersystem bereitgestellt wird, welches Substrat mit jeder dimensionalen Breite aufnimmt. DE3523521A1 zeigt eine Sprühvorrichtung nach dem Stand der Technik.

In einigen klebstoffspendenden Anwendungen ist es wünschenswert, dass der Klebstoff derart auf ein Substrat aufgetragen wird, dass er möglichst die volle Breite des Substrats bedeckt. Zu diesen Anwendungen gehören beispielsweise das Auftragen von Klebstoffen bei der Herstellung von Fahrzeuginnenausstattungsteilen, und insbesondere beim Auftragen von Klebstoffen auf der Unterseite einer Dekorschicht bzw. auf ein Substrat, mit welchem eine Dekorschicht klebend verbunden werden soll. Typischerweise wird der Klebstoff auf das sogenannte "Trägerteil" (insbesondere ein Kunststoff-Spritzgußteil) aufgetragen und dann das Teil in eine Vorrichtung zur Presskaschierung eingelegt. Der Klebstoff kann per IR-Licht reaktiviert werden, und dann kann das Trägerteil mit einem Dekorzuschnitt verpresst werden.

Für solche Anwendungen ist es insbesondere notwendig, dass der Klebstoff möglichst gleichmäßig und homogen aufgetragen wird, da sich unter Umständen ein unregelmäßiger Klebstoffauftrag negativ auf das optische Erscheinungsbild der befestigten Dekorschicht oder negativ auf die Haptik auswirken kann. Insbesondere ist beim Klebstoffauftrag ein feines Sprühmuster ohne Spuren erwünscht, wobei vor allem keine Tropfenbildung im Muster geben darf.

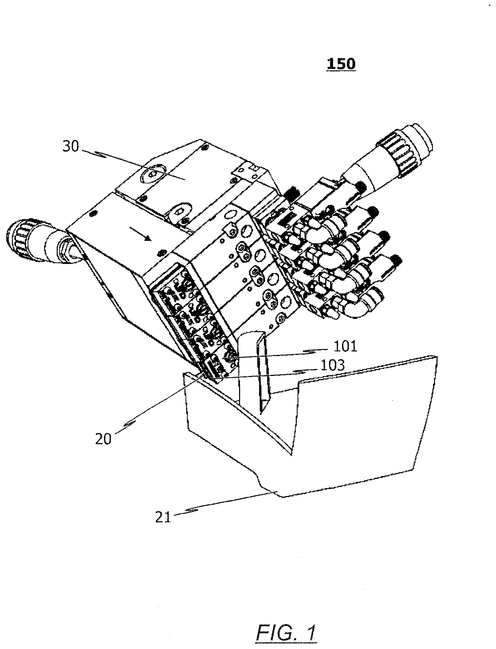

In FIG. 1 ist aus Gründen der Anschauung schematisch und in einer isometrischen Ansicht ein herkömmliches System 150 zum Auftragen von thermoplastischen Klebstoffen 20 auf ein Substrat 21 gezeigt. Das System 150 besteht im Wesentlichen aus einem Verteilerkopf 30, welcher vorzugsweise mit einem (in FIG. 1 nicht gezeigten) Aktuator, wie beispielsweise einem Roboterarm oder dergleichen, verbunden oder verbindbar ist, und welcher entlang einer Bewegungsrichtung relativ zu dem Substrat 21 bewegbar ist.

In einem Montagebereich des Verteilerkopfes 30 ist eine Düsenanordnung 101 vorzugsweise austauschbar mit dem Verteilerkopf 30 verbunden. Hierbei dient der Verteilerkopf 30 dazu, der Düsenanordnung 101 den zu versprühenden thermoplastischen Klebstoff 20 und gegebenenfalls andere Fluide, wie beispielsweise Formungsluft etc., in geeigneter Weise zuzuführen.

Die bei dem herkömmlichen System 150 zum Auftragen von thermoplastischen Klebstoffen 20 auf ein Substrat 21 zum Einsatz kommende Düsenanordnung 101 ist beispielsweise eine sogenannte UFD^{™}-Düsenanordnung der hiesigen Anmelderin, mit welcher ein Random-Auftragsmuster auf das Substrat 21 aufbringbar ist. Eine solche Düsenanordnung ist - zumindest dem Prinzip nach - in der bereits genannten Druckschrift EP 0 872 580 A beschrieben.

Kurz zusammengefasst handelt es sich hierbei um eine Düsenanordnung 101, die einen Grundkörper aufweist, welcher - in Draufsicht gesehen - zumindest im Wesentlichen rechtwinklig ausgeführt ist, und welcher mit dem Montagebereich des Verteilerkopfes 30 verbunden oder verbindbar ist.

Der Grundkörper der Düsenanordnung 101 weist eine stirnseitige Seitenfläche 103 auf, welche mit der Austrittsfläche übereinstimmt, über welche der auf das Substrat 21 aufzutragende thermoplastische Klebstoff 20 abgegeben wird.

Um den Klebstoff 20 möglichst flächig auf das Substrat 21 auftragen zu können, sind in der stirnseitigen Seitenfläche 103 des Grundkörpers, welche sich in einer senkrecht zur Bewegungsrichtung des Verteilerkopfes 30 verlaufenden Richtung erstreckt, eine Vielzahl von nebeneinander angeordneten Austrittsdüsen für den aufzutragenden Klebstoff ausgebildet. Um ein bestimmtes Auftragsmuster des Klebstoffes 20 auf dem Substrat 21 abbilden zu können, sind den einzelnen Austrittsdüsen für den aufzutragenden Klebstoff 20 entsprechende Austrittsdüsen für Formungsluft zugeordnet.

Insbesondere ist zu diesem Zweck bei der bekannten Düsenanordnung 101 vorgesehen, dass in Erstreckungsrichtung der stirnseitigen Seitenfläche 103 des Grundkörpers benachbart und insbesondere alternierend erste Austrittsdüsen für den aufzutragenden Klebstoff 20 einerseits und zweite Austrittsdüsen für entsprechende Formungsluft (insbesondere Druckluft) andererseits angeordnet sind. Die (zweiten) Austrittsdüsen für Formungsluft sind ausgebildet, eine Vielzahl von Formungsluft-Fluidströmen zu bilden, welche insbesondere konvergierend ausgerichtet sind, und zwar im Hinblick auf Klebstoff-Fluidströme, welche von den ersten Austrittsdüsen für den auf das Substrat 21 aufzutragenden Klebstoff 20 ausgerichtet sind. Durch Variation der pro Zeiteinheit von den zweiten Austrittsdüsen ausgegebenen Menge an Formungs- oder Druckluft kann der Klebstoff-Fluidstrom, welcher von den einzelnen ersten Austrittsdüsen für den Klebstoff 20 ausgegeben wird, abgelenkt werden.

Obgleich die aus dem Stand der Technik bekannten Verteilerköpfe 30 bzw. Düsenanordnungen 101 in der Lage sind, den Klebstoff 20 flächig und mit einem bestimmten Auftragsmuster auf das Substrat 21 aufzubringen, weisen die aus dem Stand der Technik bekannten Düsenanordnungen 101 gewisse Grenzen bei deren Anwendungen auf. Dies gilt insbesondere für solche Anwendungen, bei welchen ein möglichst flächiger Klebstoffauftrag auf das Substrat 21 und insbesondere ein möglichst gleichmäßiger Klebstoffauftrag auf das Substrat 21 gefordert ist, wie es beispielsweise beim Laminieren von Dekoroberflächen insbesondere auf Innenausstattungsteile für Fahrzeuge gewünscht ist.

Insbesondere besteht ein Bedarf nach einer Düsenanordnung, mit welcher das aufzutragende Fluid im Winkel versprüht werden kann, ohne dass hierzu eine Drehbewegung des Verteilers bzw. Verteilerkopfs 30 notwendig ist, da eine solche Drehbewegung häufig aufgrund des vorzusehenden geringen Abstands zwischen der Düsenanordnung und dem Substrat und der dreidimensionalen Geometrie des Substrats nicht realisierbar ist.

Ferner soll ein entsprechendes optimiertes System zum Auftragen von Fluiden, insbesondere thermoplastischen Klebstoffen, auf Substrate mit einer entsprechend komplexen Geometrie angegeben werden.

Im Hinblick auf die Düsenanordnung wird die der Erfindung zu Grunde liegende Aufgabe durch den Gegenstand des unabhängigen Patentanspruchs 1 gelöst, wobei vorteilhafte Weiterbildungen der erfindungsgemäßen Düsenanordnung in den abhängigen Patentansprüchen 2 bis 9 angegeben sind.

Im Hinblick auf das System wird die der Erfindung zu Grunde liegende Aufgabe durch den Gegenstand des nebengeordneten Patentanspruchs 10 gelöst.

Der nebengeordnete Patentanspruch 11 betrifft die Verwendung der erfindungsgemäßen Düsenanordnung zum Auftragen eines Fluids, insbesondere thermoplastischen Klebstoffs, auf einen Umbugbereich eines Bauteils.

Demgemäß betrifft die Erfindung eine Düsenanordnung zum Auftragen von Fluiden, insbesondere thermoplastischen Werkstoffen, auf ein Substrat.

Die Düsenanordnung weist einen mit einem Montagebereich eines Verteilers vorzugsweise austauschbar verbindbaren Grundkörper mit einer stirnseitigen Seitenfläche auf.

Die Düsenanordnung ist ausgebildet, relativ zu dem Substrat in einer ersten Richtung (= Bewegungsrichtung) bewegt zu werden. Hierbei kann beispielsweise das Substrat relativ zu der feststehenden Düsenanordnung oder aber auch die Düsenanordnung relativ zu dem feststehenden Substrat bewegt werden.

Der Verteiler bzw. Verteilerkopf kann beispielsweise an einem Aktuator, wie beispielsweise ein Roboterarm oder dergleichen, befestigt sein, um die Düsenanordnung relativ zu dem Substrat zu bewegen.

Es erstreckt sich die stirnseitige Seitenfläche des Grundkörpers der Düsenanordnung zumindest im Wesentlichen in einer zweiten Richtung, welche zumindest im Wesentlichen senkrecht zu der ersten Richtung, d.h. der (relativen) Bewegungsrichtung, verläuft.

Um mit Hilfe der Düsenanordnung ein Fluid, insbesondere einen thermoplastischen Klebstoff, auf ein Substrat mit einer entsprechend komplexen Geometrie und insbesondere auf ein Substrat mit Umbugbereichen auftragen zu können, ohne dass hierzu eine Drehbewegung des Verteilers bzw. Verteilerkopfs notwendig ist und dennoch ein möglichst geringer Abstand zwischen der Düsenanordnung und dem Substrat beizubehalten, ist erfindungsgemäß vorgesehen, dass in der stirnseitigen Seitenfläche des Grundkörpers ein zurückspringender Bereich ausgebildet ist, wobei in dem zurückspringenden Bereich der stirnseitigen Seitenfläche des Grundkörpers mindestens eine erste Austrittsöffnung und vorzugsweise eine Vielzahl von nebeneinander angeordneten ersten Austrittsöffnungen für das auf das Substrat aufzubringende Fluid ausgebildet ist.

Die mit der erfindungsgemäßen Lösung erzielbaren Vorteile liegen auf der Hand. Indem die ersten Austrittsöffnungen für das auf das Substrat aufzubringende Fluid in dem zurückspringenden Bereich der stirnseitigen Seitenfläche des Grundkörpers ausgeführt sind, wird in einer einfach zu realisierenden aber dennoch effektiven Weise erreicht, dass keine Komponenten und insbesondere nicht die ersten Austrittsöffnungen über die stirnseitige Seitenfläche des Grundkörpers hervorragen. Auf diese Weise wird eine besonders kompakte Bauform der Düsenanordnung erzielt, wobei ohne die Notwendigkeit einer Drehbewegung des Verteilers bzw. Verteilerkopfs mit Hilfe der Düsenanordnung und insbesondere mit Hilfe der ersten Austrittsöffnungen auch dedizierte Bereiche in insbesondere Umbugbereichen des Substrats behandelbar sind.

Es ist erfindungsgemäß vorgesehen, dass sich die stirnseitige Seitenfläche des Grundkörpers der Düsenanordnung in einer Richtung erstreckt, welche vorzugsweise zumindest im Wesentlichen senkrecht zu der (relativen) Bewegungsrichtung der Düsenanordnung bzw. des Verteilers oder Verteilerkopfs verläuft. Dabei ist vorgesehen, dass die mindestens eine erste Austrittsöffnung der Düsenanordnung derart in dem zurückspringenden Bereich der stirnseitigen Seitenfläche des Grundkörpers ausgebildet ist, dass das auf das Substrat aufzubringende Fluid von der mindestens einen ersten Austrittsöffnung in einer im Hinblick auf die Erstreckungsrichtung der stirnseitigen Seitenfläche des Grundkörpers schräg verlaufenden Richtung abgebbar ist oder abgegeben wird.

Gemäß der erfindungsgemäßen Düsenanordnung ist in diesem Zusammenhang vorgesehen, dass der zurückspringende Bereich einen im Hinblick auf die Erstreckungsrichtung der stirnseitigen Seitenfläche des Grundkörpers schräg verlaufenden Wandbereich aufweist, der über einen Kanten- oder Bogenbereich mit einem sich in der Erstreckungsrichtung der stirnseitigen Seitenfläche des Grundkörpers erstreckenden Wandbereich der stirnseitigen Seitenfläche verbunden ist. Hierbei sollte die mindestens eine erste Austrittsöffnung in dem schräg verlaufenden Wandbereich des zurückspringenden Bereichs ausgebildet sein.

Von Vorteil ist in diesem Zusammenhang insbesondere, dass der schräg verlaufende Wandbereich des zurückspringenden Bereichs nicht über eine Ebene hervorsteht, in welcher die stirnseitige Seitenfläche und insbesondere der sich in der Erstreckungsrichtung der stirnseitigen Seitenfläche des Grundkörpers erstreckende Wandbereich der stirnseitigen Seitenfläche liegt.

Gemäß bevorzugten Realisierungen ist dabei vorgesehen, dass zwischen dem schräg verlaufenden Wandbereich des zurückspringenden Bereichs und dem sich in der Erstreckungsrichtung der stirnseitigen Seitenfläche erstreckenden Wandbereich der stirnseitigen Seitenfläche ein Winkel zwischen 35° und 75° und vorzugsweise ein Winkel zwischen 45° und 55°, insbesondere ein Winkel von etwa 50° aufgespannt wird.

Gemäß Realisierungen der erfindungsgemäßen Düsenanordnung ist vorgesehen, dass im zurückspringenden Bereich der schräg verlaufende Wandbereich in einen sich zumindest im Wesentlichen in der Erstreckungsrichtung der stirnseitigen Seitenfläche erstreckenden Wandbereich übergeht.

In gleicher Weise ist es ferner denkbar, dass in dem zurückspringenden Bereich der sich zumindest im Wesentlichen in der Erstreckungsrichtung der stirnseitigen Seitenfläche des Grundkörpers erstreckende Wandbereich in einen zweiten schräg verlaufenden Wandbereich des zurückspringenden Bereichs übergeht.

Gemäß bevorzugten Realisierungen der erfindungsgemäßen Düsenanordnung ist vorgesehen, dass in dem zurückspringenden Bereich der stirnseitigen Seitenfläche des Grundkörpers nicht nur erste Austrittsöffnungen für das auf das Substrat aufzubringende Fluid ausgebildet sind, sondern ferner mindestens eine zweite Austrittsöffnung und vorzugsweise eine Vielzahl von nebeneinander angeordneten zweiten Austrittsöffnungen für ein Gas, insbesondere Druckluft, ausgebildet ist.

Insbesondere ist in diesem Zusammenhang vorgesehen, dass in dem zurückspringenden Bereich der stirnseitigen Seitenfläche des Grundkörpers eine Vielzahl von in einer ersten Reihe nebeneinander angeordnete erste Austrittsöffnungen ausgebildet ist, und dass in dem zurückspringenden Bereich der stirnseitigen Seitenfläche des Grundkörpers ferner eine Vielzahl von in einer zur ersten Reihe parallel verlaufenden zweiten Reihe nebeneinander angeordnete zweite Austrittsöffnungen ausgebildet ist.

Die mit dieser Ausführungsform zusätzlich erzielbaren Vorteile liegen auf der Hand: indem auf eine alternierende Anordnung von ersten Austrittsöffnungen für das auf das Substrat aufzubringende Fluid und zweiten Austrittsöffnungen für Formungsluft verzichtet wird, und indem alle Austrittsöffnungen für das Fluid bzw. den Klebstoff, d.h. alle ersten Austrittsöffnungen entlang einer Reihe und unmittelbar angrenzend aneinander angeordnet sind, ist es möglich, bei gleichen Abmessungen der Düsenanordnung eine deutlich höhere Anzahl an ersten Austrittsöffnungen für den aufzubringenden Klebstoff in dem zurückspringenden Bereich des Grundkörpers der Düsenanordnung unterzubringen.

Es ist weiterhin vorteilhaft, dass eine Ablenkung oder Oszillation der von den ersten Austrittsöffnungen ausgegebenen Klebstoff- oder Filament-Strahlen nur schwerpunktmäßig in Bewegungsrichtung des Roboters bzw. der Düsenanordnung geschieht. Dadurch wird die Oszillation in Querrichtung der Düsenanordnung verringert und somit ein Verschmelzen von mehreren benachbarten Filament-Strahlen verhindert, was insbesondere bei Düsen mit einem geringen Abstand der ersten Austrittsöffnungen nach dem Stand der Technik ein bekanntes Problem ist. Hierzu wird die Randschärfe des Auftrags noch weiter verbessert, da eine Quer-Oszillation hier immer schädlich ist und einen unscharfen Rand erzeugt.

Mit der erfindungsgemäßen Düsenanordnung ist dennoch eine gezielte Ablenkung der von den ersten Austrittsöffnungen abgegebenen Klebstoff-Fluidstrahlen möglich, da parallel zu der ersten Reihe der ersten Austrittsöffnungen eine zweite Reihe mit Austrittsöffnungen für ein zweites Fluid, insbesondere Formungsluft oder dergleichen, ausgebildet ist.

Durch diese parallele Anordnung der ersten Austrittsöffnungen für den aufzutragenden Klebstoff einerseits und der zweiten Austrittsöffnungen für die Formungsluft andererseits ist ein deutlich feineres Auftragsmuster des Klebstoffs auf dem Substrat realisierbar, da - im Unterschied zu den zuvor beschriebenen und aus dem Stand der Technik bekannten Düsenanordnungen - mit den zweiten Austrittsöffnungen insbesondere auch eine Ablenkung der von den ersten Austrittsöffnungen abgegebenen Klebstoff-Fluidstrahlen in der relativen Bewegungsrichtung der Düsenanordnung möglich ist.

Somit kann bei der gleichen Dimension der Düsenanordnung ein insbesondere kompaktes System bereitgestellt werden, welches sich eignet, um Klebstoff oder ein anderes Fluid besonders gleichmäßig und flächig auf das Substrat aufzubringen, was insbesondere dann wünschenswert ist, wenn eine Dekorschicht mit Hilfe einer Klebstoffschicht auf einem Substrat aufgebracht werden soll.

Um eine möglichst gezielte Ablenkung der von den ersten Austrittsöffnungen abgegebenen Fluidstrahlen zu ermöglichen, ist insbesondere vorgesehen, dass für jede erste Austrittsöffnung mindestens eine und vorzugsweise genau eine zweite Austrittsöffnung vorgesehen ist, welche von der ersten Austrittsöffnung beabstandet angeordnet ist.

Um zu erreichen, dass mit der erfindungsgemäßen Düsenanordnung möglichst feine Auftragsmuster des Klebstoffs auf dem Substrat realisiert werden können, ist in einer bevorzugten Realisierung der erfindungsgemäßen Düsenanordnung vorgesehen, dass in dem zurückspringenden Bereich der stirnseitigen Seitenfläche des Grundkörpers ferner eine Vielzahl von nebeneinander angeordneten dritten Austrittsöffnungen insbesondere für Formungsluft in einer dritten Reihe ausgebildet ist, wobei die erste Reihe mit den ersten Austrittsöffnungen für das auf das Substrat aufzutragende Fluid zwischen der zweiten und dritten Reihe mit den zweiten und dritten Austrittsöffnungen angeordnet ist.

Auch bei dieser Weiterentwicklung der erfindungsgemäßen Düsenanordnung bietet es sich an, dass für jede erste Austrittsöffnung mindestens eine und auch vorzugsweise genau eine dritte Austrittsöffnung vorgesehen ist.

Vorzugsweise ist die Düsenanordnung als laminierte Düsenbaueinheit ausgebildet, die aus einer Vielzahl miteinander flächig verbundenen Flächenelementen besteht. Das Ausbilden der Düsenanordnung als laminierte Düsenbaueinheit hat den Vorteil, dass besonders präzise aber dennoch in einer relativ einfachen Weise auch komplexe Fluidkanalsysteme im Inneren des Grundkörpers ausgestaltet werden können.

Mit anderen Worten, auch komplexe Fluidkanäle bzw. Fluidkanalsysteme sind mühelos in der Düsenanordnung integrierbar. Diese Fluidkanäle sind über einen entsprechenden Schnittstellenbereich mit entsprechend zugeordneten Fluidkanälen im Montagebereich des Verteilerkopfs in Fluidverbindung bringbar.

Alles in allem ermöglicht somit die Ausgestaltung der erfindungsgemäßen Düsenanordnung als laminierte Düsenbaueinheit eine kompakte Düsenanordnung, in welcher alle notwendigen Funktionalitäten integriert sind.

Alternativ hierzu ist es aber auch denkbar, die erfindungsgemäße Düsenanordnung mittels 3D-Druck herzustellen. Hier kann insbesondere das Laser-Sinter-Verfahren oder Mikrolaser-Sintern verwendet werden. Durch diese Fertigungsmethode können die Fluidkanäle in mehreren Ebenen gekrümmt ausgeführt werden, um perfekte Strömungen zu erreichen. Eine Montage von Düsen entfällt und somit auch jeder mögliche Montagefehler oder Toleranzabweichung durch die Montage.

In einer Weiterbildung der erfindungsgemäßen Düsenanordnung, die als laminierte Düsenbaueinheit ausgebildet ist, ist vorgesehen, dass die Düsenanordnung zwei voneinander beabstandete äußere Klemmplatten aufweist, zwischen denen ein Düsenpaket, welches vorzugsweise aus einer Vielzahl von miteinander flächig verbundenen Flächenelementen aufgebaut ist, austauschbar aufgenommen ist.

Bei dieser Ausführungsform ist es denkbar, dass an Stelle des Düsenpakets zwischen den beiden voneinander beabstandeten äußeren Klemmplatten ein Simulator-Düsenpaket aufnehmbar ist. Das Simulator-Düsenpaket kann einen Schweifbereich mit mindestens einem streifen- oder filamentartigen Bereich aufweisen, der sich in der Richtung erstreckt, in welcher bei dem Düsenpaket das auf das Substrat aufzubringende Fluid von den ersten Auslassöffnungen abgegeben wird.

Alternativ hierzu ist es aber auch denkbar, dass das Simulator-Düsenpaket anstelle der Düsenanordnung mit dem Verteilerkopf verbunden wird.

Durch das Vorsehen eines solchen Simulator-Düsenpakets ist in einer einfach zu realisierenden aber dennoch effektiven Weise sichergestellt, dass eine von einem Roboter durchzuführende Bewegungsbahn für die Düsenanordnung in einfacher Weise einlernbar ist. Gleichzeitig ist sichergestellt, dass keine Kollision zwischen der Düsenanordnung und dem Substrat auftritt, und dass ein vorab festgelegter oder festlegbarer Abstand zwischen der Düsenanordnung und dem Substrat eingehalten wird.

Die Erfindung betrifft ferner ein System zum Auftragen von Fluiden, insbesondere thermoplastischen Klebstoffen, auf ein Substrat. Das System weist einen Verteilerkopf auf, welcher vorzugsweise mit einem Aktuator, insbesondere in Gestalt eines Roboterarms, verbunden oder verbindbar ist, und welcher entlang einer Bewegungsrichtung relativ zu dem Substrat bewegbar ist. Das erfindungsgemäße System weist ferner eine Düsenanordnung der zuvor genannten erfindungsgemäßen Art auf, welche in einem Montagebereich des Verteilerkopfs vorzugsweise austauschbar mit dem Verteilerkopf verbunden ist.

Insbesondere ist in diesem Zusammenhang vorgesehen, dass die mindestens eine Düsenanordnung derart in dem Montagebereich des Verteilerkopfs angeordnet ist, dass die stirnseitige Seitenfläche des Grundkörpers der Düsenanordnung zumindest im Wesentlichen senkrecht zur Bewegungsrichtung des Verteilerkopfs ausgerichtet ist.

Im Hinblick auf das erfindungsgemäße Verfahren zum Auftragen von Fluiden, und insbesondere thermoplastischen Klebstoffen, auf ein Substrat ist vorgesehen, dass eine Düsenanordnung der zuvor beschriebenen erfindungsgemäßen Art relativ zu dem Substrat in einer Bewegungsrichtung bewegt wird. Durch die ersten Austrittsöffnungen der Düsenanordnung werden dann während der Bewegung zu dem Substrat Fluidstrahlen, insbesondere thermoplastische Klebstoffstrahlen, abgegeben.

Diese von den ersten Austrittsöffnungen abgegebenen Fluidstrahlen können beispielsweise mit Hilfe von über zweite und/oder dritte Austrittsöffnungen abgegebene Formungsluft insbesondere periodisch von der Hauptstromachse abgelenkt werden, um so insbesondere ein Random-Muster des auf dem Substrat aufzutragenden Fluidstrahls zu erzeugen.

Nachfolgend wird unter Bezugnahme auf die beiliegenden Zeichnungen eine exemplarische Ausführungsform der erfindungsgemäßen Düsenanordnung näher beschrieben.

Es zeigen:
- FIG. 1: schematisch und in einer isometrischen Ansicht ein herkömmliches System zum Auftragen von thermoplastischen Klebstoffen auf ein Substrat;
- FIG. 2: schematisch und in einer isometrischen Ansicht eine exemplarische Ausführungsform der erfindungsgemäßen Düsenanordnung;
- FIG. 3: schematisch eine detaillierte Ansicht auf den in der stirnseitigen Seitenfläche des Grundkörpers der exemplarischen Ausführungsform der erfindungsgemäßen Düsenanordnung ausgebildeten zurückspringenden Bereich;
- FIG. 4: schematisch die exemplarische Ausführungsform der erfindungsgemäßen Düsenanordnung in einer Explosionsdarstellung;
- FIG. 5: schematisch und in einer isometrischen Ansicht eine Ausführungsform des erfindungsgemäßen Systems zum Auftragen von thermoplastischen Klebstoffen auf ein Substrat mit einer Düsenanordnung gemäß FIG. 2;
- FIG. 6: schematisch eine erste exemplarische Ausführungsform einer Simulations-Düse zum Simulieren des Sprühmusters der erfindungsgemäßen Düsenanordnung; und
- FIG. 7: schematisch eine zweite exemplarische Ausführungsform einer Simulations-Düse zum Simulieren des Sprühmusters der erfindungsgemäßen Düsenanordnung.

Dass thermoplastische Klebstoff gute Bindemittel bilden, hat man schon lange erkannt. Sie erhärten nämlich schnell, was einen besonderen Vorteil bedeutet, wenn der Klebstoff schrittweise aufgetragen wird und die Verbindung der zu verklebenden Teile dann sofort erfolgt, und die erhaltene Klebeverbindung ist sehr stark. Ferner ist die Auswahl der Bestandteile, aus denen sich thermoplastische Klebstoffe zusammensetzen lassen, so groß, dass für einen gegebenen Zweck leicht eine entsprechende Klebstoffkomposition hergestellt werden kann.

Dennoch haben sich dem verbreiteten Gebrauch dieser Klebstoffe insofern gewisse Schwierigkeiten in den Weg gestellt, als der thermoplastische Klebstoff teilweise nicht oder nur mit größeren Schwierigkeiten in einer automatisierten Weise auf bestimmte, ausgewählte Bereiche eines Substrats insbesondere mit einer komplexen Geometrie auftragen lässt. Dies gilt insbesondere für Umbugbereiche von als Formkörper ausgebildete Substraten.

In FIG. 1 ist schematisch und in einer isometrischen Ansicht ein herkömmliches System 150 gezeigt, mit welchem in einer automatisierten Weise auf bestimmte Bereiche eines als Formteil ausgebildeten Substrats ein thermoplastischer Klebstoff 20 aufgetragen wird. Das herkömmliche System 150 zum Auftragen von thermoplastischen Klebstoffen 20 auf ein als Formkörper ausgebildeten Substrat 21 weist einen Verteilerkopf 30 auf, welcher vorzugsweise mit einem in FIG. 1 nicht gezeigten Roboterarm verbunden oder verbindbar ist, und welcher mit Hilfe des Roboterarms entlang einer Bewegungsrichtung relativ zu dem Substrat 21 bewegbar ist.

Wie in FIG. 1 dargestellt, weist das herkömmliche System 150 zum Auftragen von thermoplastischen Klebstoffen ferner eine Düsenanordnung 101, welche in einem Montagebereich des Verteilerkopfes 30 vorzugsweise austauschbar mit dem Verteilerkopf 30 verbunden ist.

Die Düsenanordnung 101 wird im Wesentlichen durch einen in etwa rechteckigen Grundkörper gebildet, über den die Düsenanordnung 101 mit dem Montagebereich des Verteilerkopfes 30 verbunden ist. Dieser - in Draufsicht gesehen - im Wesentlichen rechteckige Grundkörper der Düsenanordnung 101 weist eine stirnseitige Seitenfläche 103 auf, in welcher mindestens eine Austrittsdüse ausgebildet ist. Die von der Austrittsdüse bzw. der Austrittsöffnung der Austrittsdüse vorgegebene Hauptströmachse, entlang welcher sich das von der Austrittsdüse abgegebene thermoplastische Klebstoffmaterial 20 bewegt, schließt mit der stirnseitigen Seitenfläche 103 des Grundkörpers der Düsenanordnung 101 einen zumindest im Wesentlichen rechten Winkel ein. Ferner ist die stirnseitige Seitenfläche 103 des Grundkörpers in Bewegungsrichtung des Verteilers 30.

In Anwendungen des herkömmlichen Systems 150 bei Formteilen mit komplexen geometrischen Strukturen und insbesondere Umbugbereichen lässt es sich in der Regel nicht vermeiden, dass entweder Teile des Systems, insbesondere der Verteilerkopf oder die Düsenanordnung, mit Bereichen des Formteils in Kontakt kommen bzw. dass mit der Düsenanordnung nicht alle notwendigen Bereiche des Formteils erreicht werden können.

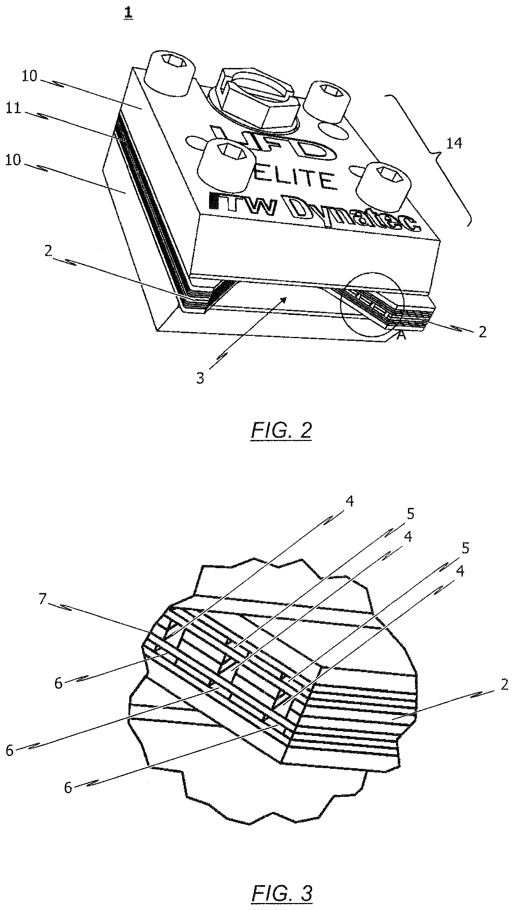

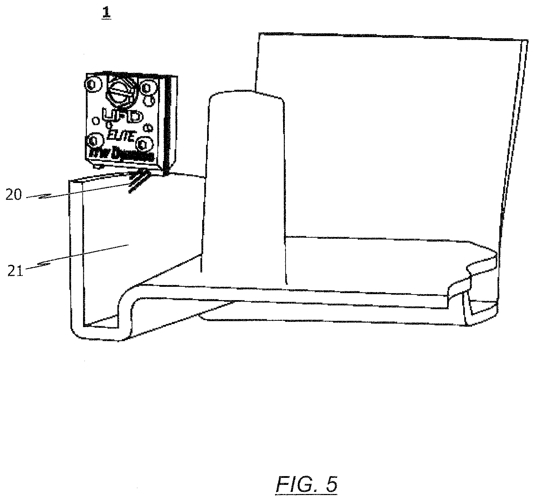

Um dieses Problem zu lösen, wird erfindungsgemäß eine optimierte Düsenanordnung 1 vorgeschlagen, wobei eine exemplarische Ausführungsform dieser Düsenanordnung 1 nachfolgend unter Bezugnahme auf die Darstellungen in FIG. 2 bis FIG. 7 näher beschrieben wird.

Die erfindungsgemäße Düsenanordnung **1,** wie sie exemplarisch in FIG. 2 bis FIG. 7 gezeigt ist, weist einen Grundkörper 14 auf, welcher mit einem Montagebereich eines Verteilers oder Verteilerkopfs vorzugsweise austauschbar verbindbar ist.

Der Grundkörper 14 kann beispielsweise eine zumindest im Wesentlichen rechteckige Konfiguration mit einer stirnseitigen Seitenfläche aufweisen. Die stirnseitige Seitenfläche des Grundkörpers 14 erstreckt sich vorzugsweise in einer Richtung, die im Betrieb der Düsenanordnung 1, d.h. wenn die Düsenanordnung 1 zum Auftragen von Fluiden auf ein Substrat 21 verwendet wird, senkrecht zu der Richtung verläuft, in welcher das Substrat 21 relativ zu der Düsenanordnung 1 bewegt wird.

Die erfindungsgemäße Düsenanordnung 1 zeichnet sich dadurch aus, dass in der stirnseitigen Seitenfläche des Grundkörpers 14 ein zurückspringender Bereich 3 ausgebildet ist. Wie es insbesondere der FIG. 2 und der Detailansicht in FIG. 3 zu entnommen werden kann, ist in dem zurückspringenden Bereich 3 der stirnseitigen Seitenfläche des Grundkörpers 14 eine Vielzahl von nebeneinander angeordneten ersten Austrittsöffnungen 4 für das auf das Substrat 21 aufzubringende Fluid 20 ausgebildet.

Die stirnseitige Seitenfläche des Grundkörpers 14 erstreckt sich dabei in einer ersten Richtung, wobei die ersten Austrittsöffnungen 4 derart in dem zurückspringenden Bereich 3 der stirnseitigen Seitenfläche des Grundkörpers 14 ausgebildet sind, dass das auf das Substrat 21 aufzubringende Fluid 20 von den ersten Austrittsöffnungen 4 in einer im Hinblick auf die erste Richtung schräg verlaufenden Richtung abgebbar ist oder abgegeben wird.

Im Einzelnen, und wie es insbesondere der Detailansicht in FIG. 3 entnommen werden kann, weist der zurückspringende Bereich 3 einen im Hinblick auf die erste Richtung schräg verlaufenden Wandbereich 7 auf, der über einen Kanten- oder Bogenbereich mit einem sich in der ersten Richtung erstreckenden Wandbereich 2 der stirnseitigen Seitenfläche verbunden ist. Dabei sind die ersten Austrittsöffnungen 4 in dem schräg verlaufenden Wandbereich 7 des zurückspringenden Bereichs 3 ausgebildet.

Zu betonen in diesem Zusammenhang ist, dass der schräg verlaufende Wandbereich 7 des zurückspringenden Bereichs 3 nicht über eine Ebene hervorsteht, in welcher die stirnseitige Seitenfläche und insbesondere der sich in der ersten Richtung erstreckende Wandbereich 2 der stirnseitigen Seitenfläche liegt. Insbesondere ist bei der in den Zeichnungen gezeigten exemplarischen Ausführungsform der erfindungsgemäßen Düsenanordnung 1 vorgesehen, dass zwischen dem schräg verlaufenden Wandbereich 7 des zurückspringenden Bereichs 3 und dem sich in der ersten Richtung erstreckenden Wandbereich 2 der stirnseitigen Seitenfläche ein Winkel von etwa 50° aufgespannt wird.

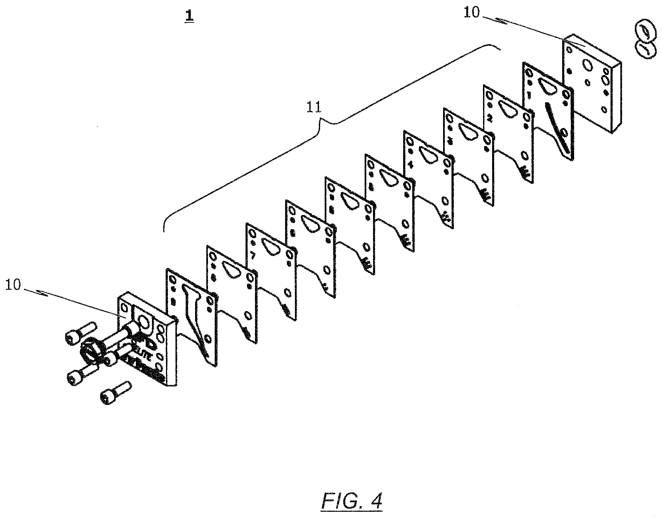

Der Explosionsansicht in FIG. 4 kann entnommen werden, dass im zurückspringenden Bereich 3 der schräg verlaufende Wandbereich 7 in einen sich zumindest im Wesentlichen in der ersten Richtung erstreckenden Wandbereich übergeht. Ferner ist der Explosionsansicht gemäß FIG. 4 zu entnehmen, dass in dem zurückspringenden Bereich 3 der sich zumindest im Wesentlichen in der ersten Richtung erstreckende Wandbereich in einen zweiten schräg verlaufenden Wandbereich 7 des zurückspringenden Bereichs 3 übergeht.

Der Detailansicht in FIG. 3 ist insbesondere zu entnehmen, dass in dem zurückspringenden Bereich 3 der stirnseitigen Seitenfläche des Grundkörpers 14 ferner zweite Austrittsöffnungen 5 für Formungsluft ausgebildet sind. Im Einzelnen ist dabei vorgesehen, dass in dem zurückspringenden Bereich 3 der stirnseitigen Seitenfläche des Grundkörpers 14 eine Vielzahl von in einer ersten Reihe nebeneinander angeordnete erste Austrittsöffnungen 4 ausgebildet ist, und dass in dem zurückspringenden Bereich 3 der stirnseitigen Seitenfläche des Grundkörpers 14 ferner eine Vielzahl von in einer zur ersten Reihe parallel verlaufenden zweiten Reihe nebeneinander angeordnete zweite Austrittsöffnungen 5 ausgebildet ist.

Darüber hinaus ist bei der in den Zeichnungen gezeigten Ausführungsform vorgesehen, dass in dem zurückspringenden Bereich 3 der stirnseitigen Seitenfläche des Grundkörpers 14 ferner eine Vielzahl von in einer zur ersten Reihe parallel verlaufenden dritten Reihe nebeneinander angeordnete dritte Austrittsöffnungen 6 für Formungsluft ausgebildet ist, wobei die erste Reihe mit den ersten Austrittsöffnungen 4 zwischen der zweiten und dritten Reihe mit den zweiten und dritten Austrittsöffnungen 5, 6 angeordnet ist.

Der Explosionsansicht in FIG. 4 kann entnommen werden, dass die Düsenanordnung 1 insbesondere als laminierte Düsenbaueinheit ausgebildet ist, die aus einer Vielzahl miteinander flächig verbundenen Flächenelementen besteht. Insbesondere ist bei der exemplarischen Ausführungsform der erfindungsgemäßen Düsenanordnung 1 vorgesehen, dass die Düsenanordnung 1 zwei voneinander beabstandete äußere Klemmplatten 10 aufweist, zwischen denen ein Düsenpaket 11, welches vorzugsweise aus einer Vielzahl von miteinander flächig verbundenen Flächenelementen aufgebaut ist, austauschbar aufgenommen ist.

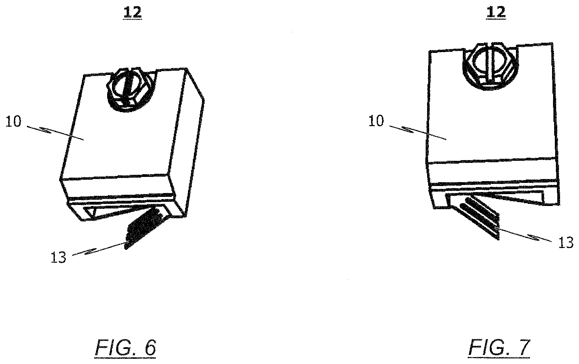

Zum Simulieren des mit der erfindungsgemäßen Düsenanordnung erzielbaren Klebstoffauftrags kann anstelle der erfindungsgemäßen Düsenanordnung 1 auch eine Simulations-Düse verwendet werden, wie sie in FIG. 6 und FIG. 7 gezeigt ist. Die Simulations-Düse 12 weist einen Schweifbereich 13 mit mindestens einem streifen- oder filamentartigen Bereich auf, der sich in der Richtung erstreckt, in welcher bei dem Düsenpaket 11 das auf das Substrat 21 aufzubringende Fluid 20 von den ersten Auslassöffnungen 4 abgegeben wird.

Die Simulations-Düse 12 und insbesondere der Schweifbereich 13 der Simulations-Düse 12 ist insbesondere aus Kunststoff, insbesondere aus einem elastischen Kunststoff gebildet.

Die Erfindung ist nicht auf das in den Zeichnungen gezeigte exemplarische Ausführungsbeispiel beschränkt.

### Bezugszeichenliste

- 1: Düsenanordnung
- 2: stirnseitige Seitenfläche/Wandbereich der stirnseitigen Seitenfläche
- 3: zurückspringender Bereich
- 4: erste Austrittsöffnung
- 5: zweite Austrittsöffnung
- 6: dritte Austrittsöffnung
- 7: schräg verlaufender Wandbereich des zurückspringenden Bereichs
- 10: äußere Klemmplatten
- 11: aus miteinander flächig verbundenen Flächenelementen aufgebautes Düsenpaket
- 12: Simulations-Düse
- 13: Schweifbereich
- 14: Grundkörper
- 20: thermoplastischer Klebstoff
- 21: Substrat
- 30: Verteilerkopf
- 101: Düsenanordnung (Stand der Technik)
- 103: stirnseitige Seitenfläche des Grundkörpers (Stand der Technik)
- 150: System zum Auftragen von Fluiden (Stand der Technik)

## Patentansprüche

1. Düsenanordnung (1) zum Auftragen von Fluiden (20), insbesondere thermoplastischen Werkstoffen, auf ein Substrat (21), wobei die Düsenanordnung (1) einen mit einem Montagebereich eines Verteilers (30) vorzugsweise austauschbar verbindbaren Grundkörper (14) mit einer zumindest im Wesentlichen rechteckigen Konfiguration und mit einer stirnseitigen Seitenfläche aufweist, wobei in der stirnseitigen Seitenfläche des Grundkörpers (14) ein in Richtung des Grundkörpers (14) zurückspringender Bereich (3) ausgebildet ist, wobei in dem zurückspringenden Bereich (3) der stirnseitigen Seitenfläche des Grundkörpers (14) mindestens eine erste Austrittsöffnung (4) und vorzugsweise eine Vielzahl von nebeneinander angeordneten ersten Austrittsöffnungen (4) für das auf das Substrat (21) aufzubringende Fluid (20) ausgebildet ist,
**dadurch gekennzeichnet, dass**
sich die stirnseitige Seitenfläche in einer ersten Richtung erstreckt, und wobei die mindestens eine erste Austrittsöffnung (4) derart in dem zurückspringenden Bereich (3) der stirnseitigen Seitenfläche des Grundkörpers (14) ausgebildet ist, dass das auf das Substrat (21) aufzubringende Fluid (20) von der mindestens einen ersten Austrittsöffnung (4) in einer im Hinblick auf die erste Richtung schräg verlaufenden Richtung abgebbar ist oder abgegeben wird, wobei der zurückspringende Bereich (3) einen im Hinblick auf die erste Richtung schräg verlaufenden Wandbereich (7) aufweist, der über einen Kanten- oder Bogenbereich mit einem sich in der ersten Richtung erstreckenden Wandbereich (2) der stirnseitigen Seitenfläche verbunden ist, wobei die mindestens eine erste Austrittsöffnung (4) in dem schräg verlaufenden Wandbereich (7) des zurückspringenden Bereichs (3) ausgebildet ist, wobei im zurückspringenden Bereich (3) der schräg verlaufende Wandbereich (7) in einen sich zumindest im Wesentlichen in der ersten Richtung erstreckenden Wandbereich übergeht, und wobei in dem zurückspringenden Bereich (3) der sich zumindest im Wesentlichen in der ersten Richtung erstreckende Wandbereich vorzugsweise in einen zweiten schräg verlaufenden Wandbereich (7) des zurückspringenden Bereichs (3) übergeht.

2. Düsenanordnung (1) nach Anspruch 1,
wobei der schräg verlaufende Wandbereich (7) des zurückspringenden Bereichs (3) nicht über eine Ebene hervorsteht, in welcher die stirnseitige Seitenfläche und insbesondere der sich in der ersten Richtung erstreckende Wandbereich (2) der stirnseitigen Seitenfläche liegt.

3. Düsenanordnung (1) nach Anspruch 1 oder 2,
wobei zwischen dem schräg verlaufenden Wandbereich (7) des zurückspringenden Bereichs (3) und dem sich in der ersten Richtung erstreckenden Wandbereich (2) der stirnseitigen Seitenfläche ein Winkel zwischen 35° und 75° und vorzugsweise ein Winkel zwischen 45° und 55° aufgespannt wird.

4. Düsenanordnung (1) nach einem der Ansprüche 1 bis 3,
wobei in dem zurückspringenden Bereich (3) der stirnseitigen Seitenfläche des Grundkörpers (14) ferner mindestens eine zweite Austrittsöffnung (5) und vorzugsweise eine Vielzahl von nebeneinander angeordneten zweiten Austrittsöffnungen (5) für ein Gas, insbesondere Druckluft, ausgebildet ist.

5. Düsenanordnung (1) nach Anspruch 4,
wobei in dem zurückspringenden Bereich (3) der stirnseitigen Seitenfläche des Grundkörpers (14) eine Vielzahl von in einer ersten Reihe nebeneinander angeordnete erste Austrittsöffnungen (4) ausgebildet ist, und wobei in dem zurückspringenden Bereich (3) der stirnseitigen Seitenfläche des Grundkörpers (14) eine Vielzahl von in einer zur ersten Reihe parallel verlaufenden zweiten Reihe nebeneinander angeordnete zweite Austrittsöffnungen (5) ausgebildet ist.

6. Düsenanordnung (1) nach Anspruch 5,
wobei in dem zurückspringenden Bereich (3) der stirnseitigen Seitenfläche des Grundkörpers (14) ferner eine Vielzahl von in einer zur ersten Reihe parallel verlaufenden dritten Reihe nebeneinander angeordneten dritten Austrittsöffnungen (6) für ein Gas, insbesondere Druckluft, ausgebildet ist, wobei die erste Reihe mit den ersten Austrittsöffnungen (4) zwischen der zweiten und dritten Reihe mit den zweiten und dritten Austrittsöffnungen (5, 6) angeordnet ist.

7. Düsenanordnung (1) nach Anspruch 5 oder 6,
wobei jeder ersten Austrittsöffnung (4) eine und vorzugsweise genau eine zweite und/oder dritte Austrittsöffnung (5, 6) zugeordnet ist, die quer zur Längserstreckungsrichtung der ersten Reihe beabstandet zur ersten Austrittsöffnung (4) ausgebildet ist.

8. Düsenanordnung (1) nach einem der Ansprüche 4 bis 7,
wobei eine effektive Fläche einer jeden ersten Austrittsöffnung (4) vorzugsweise gleich groß oder zumindest im Wesentlichen gleich groß ist, und wobei die Öffnung einer jeden ersten Austrittsöffnung (4) insbesondere größer als eine effektive Fläche der zweiten und/oder dritten Austrittsöffnungen (5, 6) ist.

9. Düsenanordnung (1) nach einem der Ansprüche 1 bis 8,
wobei die Düsenanordnung (1) als laminierte Düsenbaueinheit ausgebildet ist, die aus einer Vielzahl miteinander flächig verbundenen Flächenelementen besteht,
wobei die Düsenanordnung (1) vorzugsweise zwei voneinander beabstandete äußere Klemmplatten (10) aufweist, zwischen denen ein Düsenpaket (11), welches vorzugsweise aus einer Vielzahl von miteinander flächig verbundenen Flächenelementen aufgebaut ist, austauschbar aufgenommen ist.

10. System zum Auftragen von Fluiden (20), insbesondere thermoplastischen Klebstoffen, auf ein Substrat (21), wobei das System Folgendes aufweist:
- einen Verteilerkopf (30), welcher vorzugsweise mit einem Aktuator, insbesondere in Gestalt eines Roboterarms, verbunden oder verbindbar ist, und welcher entlang einer Bewegungsrichtung relativ zu dem Substrat (21) bewegbar ist; und
- mindestens eine Düsenanordnung (1) nach einem der Ansprüche 1 bis 9, welche in einem Montagebereich des Verteilerkopfes (30) vorzugsweise austauschbar mit dem Verteilerkopf verbunden ist,
wobei die mindestens eine Düsenanordnung (1) derart in dem Montagebereich des Verteilerkopfes angeordnet ist, dass die stirnseitige Stirnfläche des Grundkörpers (14) der Düsenanordnung (1) zumindest im Wesentlichen senkrecht zur Bewegungsrichtung des Verteilerkopfes (30) ausgerichtet ist.

11. Verfahren zum Auftragen von Fluiden (20), insbesondere thermoplastischen Klebstoffen, auf ein Substrat (21), wobei die folgenden Verfahrensschritte vorgesehen sind:
- Bewegen einer Düsenanordnung (1) relativ zu dem Substrat (21) in einer Bewegungsrichtung, wobei die Düsenanordnung (1) eine Düsenanordnung (1) nach einem der Ansprüche 1 bis 9 ist; und
- Abgeben eines Fluidstrahls durch die ersten Austrittsöffnungen (4) der Düsenanordnung (1) während der Bewegung der Düsenanordnung (1) relativ zu dem Substrat (21),
wobei vorzugsweise die durch die ersten Austrittsöffnungen (4) abgegebenen Fluidstrahlen vorzugsweise mit Hilfe von über die zweiten und/oder dritten Austrittsöffnungen (5, 6) abgegebene Formungsluft, insbesondere periodisch von einer Hauptstromachse abgelenkt werden, insbesondere zum Erzeugen eines Omega-förmigen Musters des auf dem Substrat (21) aufgetragenen Fluidstrahls.

## Claims

1. A nozzle assembly (1) for applying fluids (20), in particular thermoplastic materials, onto a substrate (21), wherein the nozzle assembly (1) comprises a base body (14) that is preferably interchangeably connectable to a mounting region of a distributor (30), the base body (14) having an at least substantially rectangular configuration and a front-side lateral surface, wherein a region (3) recessed toward the base body (14) is formed in the front-side lateral surface of the base body (14), wherein at least one first outlet opening (4), and preferably a plurality of first outlet openings (4) arranged adjacently, for the fluid (20) to be applied to the substrate (21), is formed in the recessed region (3) of the front-side lateral surface of the base body (14), **characterized in that** the front-side lateral surface extends in a first direction, and wherein the at least one first outlet opening (4) is formed in the recessed region (3) of the front-side lateral surface of the base body (14) such that the fluid (20) to be applied to the substrate (21) can be discharged or is discharged from the at least one first outlet opening (4) in a direction oblique with respect to the first direction, wherein the recessed region (3) comprises a wall region (7) that extends obliquely with respect to the first direction and is connected via an edge or arcuate region to a wall region (2) of the front-side lateral surface extending in the first direction, wherein the at least one first outlet opening (4) is formed in the obliquely extending wall region (7) of the recessed region (3), wherein
in the recessed region (3), the obliquely extending wall region (7) transitions into a wall region extending at least substantially in the first direction, and wherein in the recessed region (3), the wall region extending at least substantially in the first direction preferably transitions into a second obliquely extending wall region (7) of the recessed region (3).

2. The nozzle assembly (1) according to claim 1, wherein the obliquely extending wall region (7) of the recessed region (3) does not project beyond a plane in which the front-side lateral surface lies, and in particular in which the wall region (2) of the front-side lateral surface extending in the first direction lies.

3. The nozzle assembly (1) according to claim 1 or 2, wherein an angle between 35° and 75°, and preferably an angle between 45° and 55°, is spanned between the obliquely extending wall region (7) of the recessed region (3) and the wall region (2) of the front-side lateral surface extending in the first direction.

4. The nozzle assembly (1) according to one of claims 1 to 3, wherein at least one second outlet opening (5), and preferably a plurality of second outlet openings (5) arranged adjacently, for a gas, in particular compressed air, is further formed in the recessed region (3) of the front-side lateral surface of the base body (14).

5. The nozzle assembly (1) according to claim 4,
wherein a plurality of first outlet openings (4) arranged adjacently in a first row is formed in the recessed region (3) of the front-side lateral surface of the base body (14), and wherein a plurality of second outlet openings (5) arranged adjacently in a second row extending parallel to the first row is formed in the recessed region (3) of the front-side lateral surface of the base body (14).

6. The nozzle assembly (1) according to claim 5,
wherein a plurality of third outlet openings (6) for a gas, in particular compressed air, arranged adjacently in a third row extending parallel to the first row, is further formed in the recessed region (3) of the front-side lateral surface of the base body (14), wherein the first row with the first outlet openings (4) is arranged between the second and third rows with the second and third outlet openings (5, 6).

7. The nozzle assembly (1) according to claim 5 or 6, wherein each first outlet opening (4) is associated with one, and preferably exactly one, second and/or third outlet opening (5, 6) configured so as to be spaced apart from the first outlet opening (4) transversely to the longitudinal extension direction of the first row.

8. The nozzle assembly (1) according to one of claims 4 to 7, wherein an effective area of each first outlet opening (4) is preferably the same size or at least substantially the same size, and wherein the opening of each first outlet opening (4) is in particular larger than an effective area of the second and/or third outlet openings (5, 6).

9. The nozzle assembly (1) according to one of claims 1 to 8, wherein the nozzle assembly (1) is configured as a laminated nozzle unit consisting of a plurality of surface elements bonded flat to one another, wherein the nozzle assembly (1) preferably comprises two outer clamping plates (10) spaced apart from one another, between which a nozzle package (11), which is preferably constructed from a plurality of surface elements bonded flat to one another, is interchangeably accommodated.

10. A system for applying fluids (20), in particular thermoplastic adhesives, onto a substrate (21), wherein the system comprises the following:
- a distributor head (30), which is preferably connected or connectable to an actuator, in particular in the form of a robotic arm, and which is movable along a direction of movement relative to the substrate (21); and
- at least one nozzle assembly (1) according to one of claims 1 to 9, which is preferably interchangeably connected to the distributor head in a mounting region of the distributor head (30),
wherein the at least one nozzle assembly (1) is arranged in the mounting region of the distributor head such that the front-side front surface of the base body (14) of the nozzle assembly (1) is aligned at least substantially perpendicular to the direction of movement of the distributor head (30).

11. A method for applying fluids (20), in particular thermoplastic adhesives, onto a substrate (21), wherein the following method steps are provided:
- moving a nozzle assembly (1) relative to the substrate (21) in a direction of movement, wherein the nozzle assembly (1) is a nozzle assembly (1) according to any of claims 1 to 9; and
- discharging a fluid jet through the first outlet openings (4) of the nozzle assembly (1) during movement of the nozzle assembly (1) relative to the substrate (21),
wherein preferably, the fluid jets discharged through the first outlet openings (4) are preferably deflected, in particular periodically, from a main flow axis by shaping air discharged via the second and/or third outlet openings (5, 6), in particular to generate an omega-shaped pattern of the fluid jet applied on the substrate (21).

## Revendications

1. Ensemble buse (1) pour appliquer des fluides (20), en particulier des matériaux thermoplastiques, sur un substrat (21), dans lequel l'ensemble buse (1) comprend un corps de base (14) qui est de préférence connectable de manière interchangeable à une région de montage d'un distributeur (30), le corps de base (14) ayant une configuration au moins sensiblement rectangulaire et une surface latérale côté avant, dans lequel une région (3) évidée vers le corps de base (14) est formée dans la surface latérale côté avant du corps de base (14), dans lequel au moins une première ouverture de sortie (4), et de préférence une pluralité de premières ouvertures de sortie (4) agencées de manière adjacente, pour le fluide (20) à appliquer au substrat (21), est formée dans la région évidée (3) de la surface latérale côté avant du corps de base (14), **caractérisé en ce que**
la surface latérale côté avant s'étend dans une première direction, et dans lequel l'au moins une première ouverture de sortie (4) est formée dans la région évidée (3) de la surface latérale côté avant du corps de base (14) de telle sorte que le fluide (20) à appliquer au substrat (21) peut être déchargé ou est déchargé depuis l'au moins une première ouverture de sortie (4) dans une direction oblique par rapport à la première direction, dans lequel la région évidée (3) comprend une région de paroi (7) qui s'étend obliquement par rapport à la première direction et est connectée via un bord ou une région arquée à une région de paroi (2) de la surface latérale côté avant s'étendant dans la première direction, dans lequel l'au moins une première ouverture de sortie (4) est formée dans la région de paroi s'étendant obliquement (7) de la région évidée (3), dans lequel
dans la région évidée (3), la région de paroi s'étendant obliquement (7) se transforme en une région de paroi s'étendant au moins sensiblement dans la première direction, et dans lequel dans la région évidée (3), la région de paroi s'étendant au moins sensiblement dans la première direction se transforme de préférence en une deuxième région de paroi s'étendant obliquement (7) de la région évidée (3).

2. Ensemble buse (1) selon la revendication 1, dans lequel la région de paroi s'étendant obliquement (7) de la région évidée (3) ne fait pas saillie au-delà d'un plan dans lequel se trouve la surface latérale côté avant, et en particulier dans lequel se trouve la région de paroi (2) de la surface latérale côté avant s'étendant dans la première direction.

3. Ensemble buse (1) selon la revendication 1 ou 2, dans lequel un angle d'entre 35° et 75°, et de préférence un angle d'entre 45° et 55°, est couvert entre la région de paroi s'étendant obliquement (7) de la région évidée (3) et la région de paroi (2) de la surface latérale côté avant s'étendant dans la première direction.

4. Ensemble buse (1) selon l'une des revendications 1 à 3, dans lequel au moins une deuxième ouverture de sortie (5), et de préférence une pluralité de deuxièmes ouvertures de sortie (5) agencées de manière adjacente, pour un gaz, en particulier de l'air comprimé, est en outre formée dans la région évidée (3) de la surface latérale côté avant du corps de base (14).

5. Ensemble buse (1) selon la revendication 4,
dans lequel une pluralité de premières ouvertures de sortie (4) agencées de manière adjacente en une première rangée est formée dans la région évidée (3) de la surface latérale côté avant du corps de base (14), et dans lequel une pluralité de deuxièmes ouvertures de sortie (5) agencées de manière adjacente en une deuxième rangée s'étendant parallèlement à la première rangée est formée dans la région évidée (3) de la surface latérale côté avant du corps de base (14).

6. Ensemble buse (1) selon la revendication 5,
dans lequel une pluralité de troisièmes ouvertures de sortie (6) pour un gaz, en particulier de l'air comprimé, agencées de manière adjacente en une troisième rangée s'étendant parallèlement à la première rangée, est en outre formée dans la région évidée (3) de la surface latérale côté avant du corps de base (14), dans lequel la première rangée avec les premières ouvertures de sortie (4) est agencée entre les deuxième et troisième rangées avec les deuxièmes et troisièmes ouvertures de sortie (5, 6).

7. Ensemble buse (1) selon la revendication 5 ou 6, dans lequel chaque première ouverture de sortie (4) est associée à une, et de préférence exactement une, deuxième et/ou troisième ouvertures de sortie (5, 6) configurées de manière à être espacées de la première ouverture de sortie (4) transversalement à la direction d'extension longitudinale de la première rangée.

8. Ensemble buse (1) selon l'une des revendications 4 à 7, dans lequel une surface utile de chaque première ouverture de sortie (4) est de préférence de la même taille ou au moins sensiblement de la même taille, et dans lequel l'ouverture de chaque première ouverture de sortie (4) est en particulier plus grande qu'une surface utile des deuxième et/ou troisième ouvertures de sortie (5, 6).

9. Ensemble buse (1) selon l'une des revendications 1 à 8, dans lequel l'ensemble buse (1) est configuré comme une unité de buse stratifiée constituée d'une pluralité d'éléments de surface collés à plat les uns aux autres, dans lequel l'ensemble buse (1) comprend de préférence deux plaques de serrage extérieures (10) espacées l'une de l'autre, entre lesquelles un ensemble buses (11), qui est construit de préférence à partir d'une pluralité d'éléments de surface collés à plat les uns aux autres, est reçu de manière interchangeable.

10. Système pour l'application de fluides (20), en particulier d'adhésifs thermoplastiques, sur un substrat (21), dans lequel le système comprend ce qui suit :
- une tête de distributeur (30) qui est de préférence connectée ou connectable à un actionneur, en particulier sous la forme d'un bras robotique, et qui peut être déplacée le long d'une direction de déplacement par rapport au substrat (21) ; et
- au moins un ensemble buse (1) selon l'une quelconque des revendications 1 à 9, qui est connecté, de préférence de manière interchangeable, à la tête de distributeur dans une région de montage de la tête de distributeur (30),
dans lequel l'au moins un ensemble buse (1) est agencé dans la région de montage de la tête de distributeur de telle sorte que la surface avant côté avant du corps de base (14) de l'ensemble buse (1) est alignée au moins sensiblement perpendiculairement à la direction de déplacement de la tête de distributeur (30).

11. Procédé pour l'application de fluides (20), en particulier des adhésifs thermoplastiques, sur un substrat (21), dans lequel les étapes de procédé suivantes sont prévues :
- le déplacement d'un ensemble buse (1) par rapport au substrat (21) dans une direction de déplacement, dans lequel l'ensemble buse (1) est un ensemble buse (1) selon l'une quelconque des revendications 1 à 9 ; et
- la décharge d'un jet de fluide à travers les premières ouvertures de sortie (4) de l'ensemble buse (1) pendant le déplacement de l'ensemble buse (1) par rapport au substrat (21),
dans lequel, de préférence, les jets de fluide déchargés à travers les premières ouvertures de sortie (4) sont de préférence déviés, en particulier périodiquement, par rapport à un axe d'écoulement principal par air de modelage déchargé via les deuxièmes et/ou troisièmes ouvertures de sortie (5, 6), en particulier afin de générer un motif en forme d'oméga du jet de fluide appliqué au substrat (21).
